Europäisches Patentamt

European Patent Office

Office européen des brevets

(19)

(11) Veröffentlichungsnummer: **0 220 608**

**A2**

(12) # EUROPÄISCHE PATENTANMELDUNG

(21) Anmeldenummer: **86114260.2**

(51) Int. Cl.⁴: **A01C 1/00**

(22) Anmeldetag: **11.08.83**

(30) Priorität: **30.08.82 HU 277582**

(43) Veröffentlichungstag der Anmeldung:
**06.05.87 Patentblatt 87/19**

(60) Publication number of the original application in
accordance with Art.76 EPC: **0 118 472**

(84) Benannte Vertragsstaaten:
**AT BE FR GB NL**

(71) Anmelder: **SERF, Lajos**
**Népköztársagág utja 88**
**H-Budapest VI(HU)**
Anmelder: **NéMEDY, Ilona**
**Hevesi S. tér 5**
**H-Budapest VII(HU)**
Anmelder: **THUROCZI, Mária**
**Visegrádi ut 5/b**
**H-Budapest XIII(HU)**

(72) Erfinder: **SERF, Lajos**
**Népköztársagág utja 88**
**H-Budapest VI(HU)**
Erfinder: **NéMEDY, Ilona**
**Hevesi S. tér 5**
**H-Budapest VII(HU)**
Erfinder: **THUROCZI, Mária**
**Visegrádi ut 5/b**
**H-Budapest XIII(HU)**

(74) Vertreter: **Patentanwälte Viering & Jentschura**
**Steinsdorfstrasse 6**
**D-8000 München 22(DE)**

(54) **Einrichtung zur Erhöhung des biologischen Wertes von Samenkörnern, insbesondere von landwirtschaftlichem Saatgut.**

(57) Einrichtung zur Erhöhung des biologischen Wertes von Samenkörnern, insbesondere von landwirtschaftlichem Saatgut, mit einem in einem Behandlungsraum (9) oberhalb eines zur Horizontalen einstellbar neigbaren Fördertisches (4) eingebauten, mit einer elektrischen Speiseeinheit (13) zur Erzeugung einer variablen Hochspannung verbundenen gitterartigen oberen Kondensatorarmatur (11), deren Gitterelemente in in der Bewegungsrichtung der zu behandelnden Körner kleinen Abständen voneinander angeordnet sind und der eine auf Erdpotential liegende untere Kondensatorarmatur (12) zugeordnet ist, und einem mit dem Fördertisch (4) verbundenen regulierbaren Vibrator (10), dadurch gekennzeichnet, daß die obere Kondensatorarmatur aus Plattenbändern - (11) besteht, daß die elektrische Speiseeinheit (13) zur Erzeugung eines Hochspannungsfeldes von 10 bis 40 kV/cm bei Frequenzen von 2,5 bis 3 kHz ausgebildet ist, daß der Fördertisch auf eine in Förderrichtung verlaufende Neigung (α) bis zum Erreichen des natürlichen Böschungswinkels des Korngutes einstellbar ist und daß die Einrichtung als - schleppbarer Fahrzeuganhänger mit einem Fahrwerk (2) und einem Gestell (3) ausgebildet ist.

Fig. 1

Die Erfindung betrifft eine Einrichtung zur Erhöhung des biologischen Wertes von Samenkörnern, hauptsächlich von landwirtschaftlichem Saatgut, durch Dipolarisieren der Samenkörner vor der Aussaat in einem elektrostatischen Hochspannungsfeld.

Es ist für die Fachkreise wahrscheinlich , daß der Biostrom der Pflanzen -hinausgehend über Aufnahme, Umwandlung und Transport der Nährstoffe -beispielsweise auch beim Zustandebringen der Wachstumreize eine bedeutende Rolle spielt. In der Fachliteratur ist die Wechselwirkung zwischen Solarenergie, Biostrom und Pflanzenwuchs noch nicht genügend geklärt. Hingegen ist es aus Beobachtungen schon bekannt, daß die Pflanzen die erhaltene Sonnenenergie nur zum Teil ausnützen bzw. verwerten.

Unter "Erhöhung des biologischen Wertes von Samenkörnern" ist das schnelle Veranlassen und Beginnen des Keimungsprozesses, die Erzielung eines gleichmäßigeren Aufgehens der Sprößlinge bzw. der Saat, sowie eine Steigerung der Dürre-Toleranz bzw. eine bessere Effektivität zu verstehen.

Aus der GB-A-1 090 011 sind schon ein Verfahren und eine Einrichtung zur Erhöhung des biologischen Wertes von Samenkörnern bekannt. Demzufolge werden die Samenkörner noch vor der Aussaat auf einem horizontalen Vibrationsfördertisch in einem elektrostatischen Hochspannungsfeld dipolarisiert. Obzwar nun aber nach dem obigen Vorschlag der biologische Wert der Samenkörner in gewissem Maße erhöht werden kann, haben doch die praktische Erfahrungen gezeigt, daß sich bei dem auf diese Weise behandelten Saatgut die Ionen nach erfolgter Behandlung wieder zurückorientieren und daß dadurch die Behandlung zum Teil unwirksam bleibt. Als Folge hiervon zeigen die durch die Behandlung erzielten Wertsteigerungsziffern eine allzugroße Streuung, so daß die Ergebnisse nicht sicher reproduzierbar sind. Ferner wurde, um die Wirksamkeit des Verfahrens zu verbessern, versucht, das elektrostatische Hochspannungsfeld durch höhere Hochspannung mit dem Anschluß an einen Gitterkondensator zu verstärken, jedoch birgt diese Lösung die elektrische Durchschlag-und Zündgefahr.

Die oben erwähnte Einrichtung ist ortsgebunden ausgestaltet und kann deswegen nur auf zentralen Saatgutaufbereitungsanlagen zum Einsatz kommen.

Zur Erzeugung des elektrostatischen Hochspannungsfeldes dient ein Bandgenerator (Bauart "Van de Graaf"), oder ein Netzanschluß einer auftransformierenden gleichrichtenden Speiseeinheit -(Bauart "Röntgen"), bzw. eine Elektronröhren-Gleichrichterspeiseeinheit. Als weiterer Mangel ist noch zu erwähnen, daß bei der obigen Einrichtung die Möglichkeit einer Berührung der vorbehandelten Samenkörner mit Metall besteht, was durchaus nicht erwünscht ist. Aus all diesen Gründen konnte sich diese Einrichtung auch nicht in größerem Umfang durchsetzen.

Aus der GB-A-1 069 270 ist auch eine Einrichtung zum Säubern und Sortieren von Saatgutkörnern auf einem Vibrationstisch bekannt, der einstellbar schiefsteht, um das Sortieren der Saatgutkörner nach ihrer Größe zu erreichen. Über dem Vibrationstisch ist ein an Hochspannung von z.B. 20 kV liegendes Gitter zur Erzeugung eines elektrostatischen Hochspannungsfeldes angeordnet, um die Saatgutkörner hinsichtlich ihres biologischen Wertes zu stimulieren.

Mit der EP-Anmeldung 83902645.7 (0 118 472) wird Schutz begehrt für ein Verfahren, durch welches die Effektivität der Dipolarisation der Samenkörner weiter verbessert wird sowie auch die Reproduzierbarkeit des Verfahrens bei möglichst geringem Aufwand gewährleistet wird. Hierzu wird das Saatgut nach erfolgter Dipolarisierung, die vorteilhaft in einem elektrostatischen Hochspannungsfeld von 10 -40 kV/cm Spannung bei Frequenzen von 2,5 -3 kHz durchgeführt wird, zwecks Fixierung (Stabilisierung) des aufgetretenen Dipolmementes mindestens drei Tage lang in einem gegen das Erdpotential der Umgebung elektrisch isolierten Raum ruhen gelassen, wobei die Fortbewegungsgeschwindigkeit und die freie Einstellung der Samenkörner durch eine Vibrationsregulierung auf einer derart geneigten Bahn eingestellt werden soll, daß die Neigung dem natürlichen Böschungswinkel des Saatgutes angenähert ist, und das Dipolarisieren und Ruhenlassen der Samenkörner möglichst in der Nähe des zu besäenden Kulturbodens durchgeführt wird.

Durch die Erfindung wird die Aufgabe gelöst, eine Einrichtung zu schaffen, welche bei dem zuletzt genannten Verfahren mit Vorteil eingesetzt werden kann und mit welcher die Ladungsdichte des elektrostatischen Hochspannungsfeldes erhöht wird und gleichmäßiger gestaltet wird.

Die erfindungsgemäße Einrichtung weist einen Behandlungsraum mit einer darin oberhalb eines zur Horizontalen einstellbar neigbaren Fördertisches eingebauten, mit einer elektrischen Speiseeinheit zur Erzeugung einer variablen Hochspannung verbundenen gitterartigen Kondensatorarmatur, deren Gitterelemente in in der Bewegunsrichtung der zu behandelnden Körner kleinen Abständen voneinander angeordnet sind und der eine auf Erdpotential liegende untere Kondensatorarmatur zugeordnet ist, und einen mit dem Fördertisch verbundenen, regulierbaren Vibrator auf. Erfindungsgemäß besteht die obere Kondensatorarmatur aus zwei oder mehr Plattenbändern, wobei die elektrische Speiseeinheit zur Erzeugung eines Hochspannungsfeldes von 10 -40 kV/cm bei Frequenzen von 2,5 -3 kV ausgebildet ist und der Fördertisch auf eine in Förderrichtung verlaufende Neigung bis zum Erreichen des natürlichen Böschungswinkels des Korngutes einstellbar ist wobei die Einrichtung als mobiler Anhänger eines Fahrzeugs oder einer Zugmaschine ausgebildet ist.

Die erfindung wird nun anhand der Zeichnungen näher erläutert. In der Zeichnung zeigen:

Fig. 1 eine Prinzipskizze der Einrichtung gemäß der Erfindung, in Seitenansicht,

Fig. 2 ein elektrisches Schaltschema der Einrichtung nach Fig. 1, und

Fig. 3 eine funktionelle Prozessablaufskizze der erfindungsgemäßen Einrichtung nach Fig. 1.

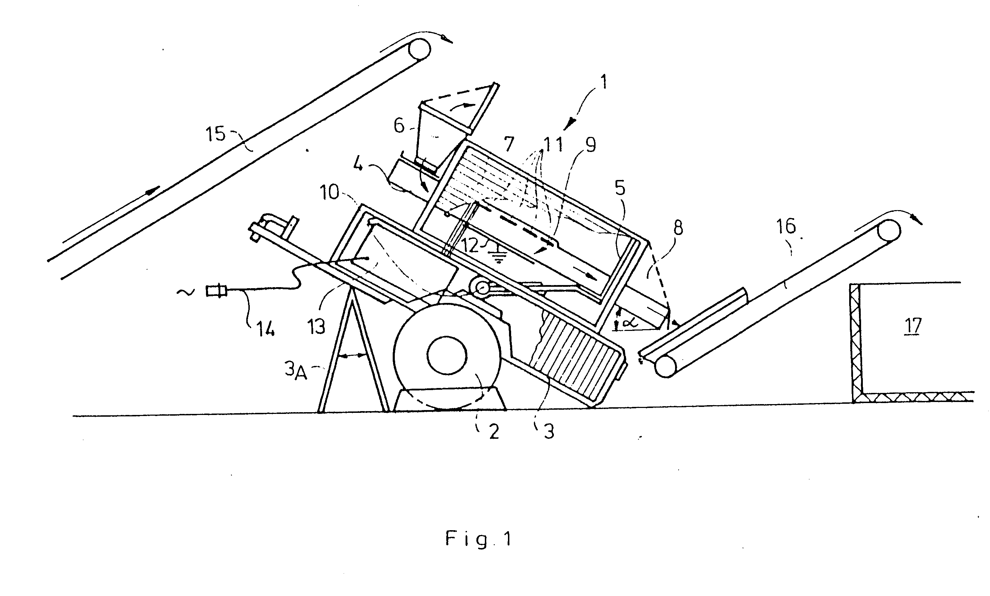

In Fig. 1 ist die erfindungsgemäße Einrichtung zur Steigerung des biologischen Wertes von Saatgut als Ganzes mit der Bezungszahl 1 bezeichnet. Diese Einrichtung 1 ist gemäß der Erfindung als Anhänger einer Zugmaschine oder eines landwirtschaftlichen Gerätes ausgebildet und weist deshalb ein mit einem Fahrwerk 2 versehenes Fahr-und Traggestell 3 auf. Auf dem Gestell 3 ist ein Fördertisch 4 in einer federnden Aufhängung 5 befestigt, die zugleich den Fördertisch 4 gegen das Gestell elektrisch isoliert. Der Fördertisch 4 ist mit einem Aufgabetrichter 6, der das Saatgut in regulierbarer Schichtstärke aufgibt, ferner mit einer Schutzabdeckung 7 und mit einer aufklappbaren Endabdeckung 8 versehen. Der Fördertisch 4 hat die Aufgabe, das in Schichtstärke auf ihn aufgegebene Saatgut durch einen unterhalb der Schutzabdeckung 7 angeordneten Behandlungsraum 9 hindurchzuleiten. Der vom Fördertisch 4 und der Horizontalen eingeschlossene Neigungswinkel $\alpha$ ist erfindungsgemäß regulierbar, im vorliegenden Falle durch Einstellen des Gestells 3 mit einem Bock 3A und dem Arretieren des Gestells in dieser Stellung. Auf diese Einstellung der Schräge wird später noch einmal zurückgekommen.

Der Fördertisch 4 ist mit einem Exzentervibrator 10 verbunden, dessen Schwingungsamplitude in an sich bekannter Weise regulierbar ist. Zusammen mit dem Fördertisch 4 vibriert auch die in dem Oberteil eines Behandlungsraumes 9 angeordnete obere Kondensatorarmatur und eine unter dem Fördertisch 4 angebrachte Kondensatorplatte 12 mit Erdpotential.

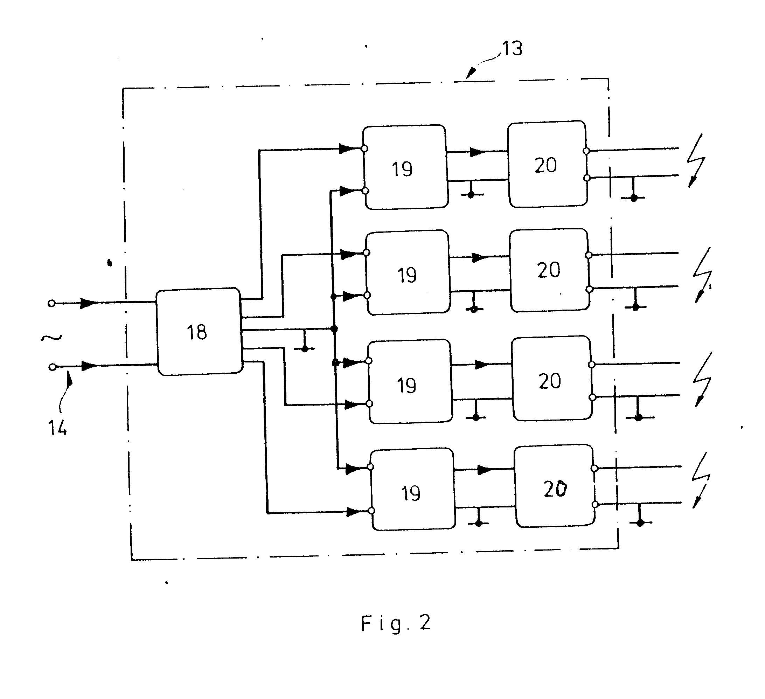

Erfindungsgemäß besteht die obere Kondensatorarmatur aus mehreren, im vorliegenden Falle aus vier, hintereinander angeordneten Plattenstreifen 11, von denen jeder an einer Hochspannung erzeugenden Speiseeinheit 13 (ausgebildet aus Halbleitern) angeschlossen ist. Die Speiseeinheit 13 selbst aber ist über ein Kabel 14 mit dem Stromnetz verbunden. Die Speiseeinheit 13 wird in ihren Details anhand von Fig. 2 näher erläutert. Die oberen Plattenstreifen 11 und die ihnen gemeinsame untere Kondensatorplatte 12 sind durch ein Kunststoffnetz von der zu behandelnden Saatgutschicht getrennt.

Die Schutzabdeckung 7 ist mit einem in der Zeichnung nicht dargestellten, verriegelbaren Fenster versehen, das zur Kontrolle, Reinigung und Regulierungsmanipulation dient.

Nach der gezeigten Ausführungsform sind an den Aufgabetrichter 6 der Einrichtung 1 ein Bandförderer 15, am Abwurfende des Fördertisches 4 aber ein weiterer Bandförderer 16 angeschlossen, welch letzterer die behandelten Samenkörner zu einem Ruhespeicher 17 weiterbefördert. Der Ruhespeicher 17 ist gegen das Erdpotential der Umgebung isoliert, vorzugsweise durch eine Speicherverpackung von mindestens 40 kV/cm elektrischer Durchschlagfestigkeit, beispielsweise als ein mit Kunststoff-Folie gefütterter Ballen, oder als Kontainer. Selbstredend kann zu diesem Zweck auch der an sich bekannte, aus Polyäthylen mehrschichtig gefertigte Sackkontainer verwendet werden, dessen Werkstoff an sich schon die nötige Durchschlagfestigkeit sicherstellt.

In Fig. 2 ist das elektrische Schaltbild der die Hochspannung erzeugenden Speiseeinheit 13 zu sehen. Sie hat die Aufgabe, die dem Netz über das Kabel 14 entnommene 220 V Spannung über einen Transformator 18 auf 12 V Spannung zu reduzieren, und damit für jeden der oberen Plattenstreifen 11 getrennt jeweils 25-30 kV Spannung mit Hilfe von zueinander parallel geschalteten, an sich bekannten Konvertern 19 und mit diesen in Reihe geschalteten Vervielfachern 20 zu erzeugen. Der Konverter 19 ist im vorliegenden Falle ein Halbleiter-Wechselgenerator, welcher die 12 V Spannung zunächst auf 9-10 kV, und dann diese über den Halbleiter-Vervielfacher auf 20-30 kV umwandelt.

Die Arbeitsweise des Ausführungsbeispieles gemäß Fig. 1 und 2 ist folgende:

Mit dem Bandförderer 15 läßt man das zu behandelnde Saatgut in den Aufgabetrichter 6 der Einrichtung 1 gelangen. Die Samenkörner gelangen dann aus dem Aufgabetrichter 6 mit der vorher eingestellten Schichtstärke auf den Fördertisch 4. Die Neigung des Fördertisches 4 wird so eingestellt, daß man ihn bis zum Erreichen des natürlichen Böschungswinkels der zu behandelnden Körner langsam hochkippt. Wenn dieser Grenzwert erreicht ist, wird die Einrichtung 1 in der eingestellten Stellung mit dem Bock 3A arretiert. Durch Regulieren der Vibrator-Amplitude wird die Fortbewegungsgeschwindigkeit des Saatgutes im Behandlungsraum 9 eingestellt. Diese wurde bei unseren Versuchen mit höchstens 2 m/s, die Frequenz des Vibrators 10 aber mit 3000 Hz gewählt.

Mit dieser Fortbeförderungsart der Samenkörner wird erreicht, daß einerseits die Samenkörner mit der gewünschten Geschwindigkeit den Behandlungsraum 9 durchwandern, andererseits durch die Vibrationswirkung sich die Samenkörner frei in die Richtung des elektrischen Kraftfeldes einstellen. Den hintereinander angeordneten Plattenstreifen 11 verdankt man eine vielfache Ladungsdichte im Behandlungsraum 9 und eine wesentlich bessere Gleichmäßigkeit als bei allen anderen bisher bekannten Lösungen. Hierdurch werden die Ionen in den Samenkörnern wirksam polarisiert, jedoch bleibt auch das Dipolmoment bestehen und wird weder duch die Aufladung noch durch Entladung gefährdet; damit aber bessert sich die Effektivität der Behandlung. Ein weiterer Vorteil liegt darin, daß die Plattenstreifen 11 von der Kondensatorplatte 12 auch in größerem Abstand eingebaut werden können, wodurch die Betriebssicherheit beträchtlich zunimmt, d.h. die Durchschlagsgefahr auf einen Mindestwert herabgesetzt wird.

Die Behandlung im Behandlungsraum 9 wird - je nach dem zu behandelnden Samenkorn -in einem elektrostatischen Hochspannungsfeld von 10-40 kV/cm mit 2,5 -3 kHz Frequenz durchgeführt, d.h. die Samenkörner werden "geschockt".

Die vorbehandelten Samenkörner werden dann von dem Fördertisch 4 bzw. von dessen Abwurfende über den Bandförderer 16 in den Ruhespeicher 17 befördert, wo das behandelte Saatgut - gegen Erdpotential isoliert -mindestens drei Tage lang in Ruhe bleibt und erst hiernach zur Aussaat kommt. Während der Ruhezeit fixiert (stabilisiert) sich das aufgetretene Dipolmoment in den Samenkörnern, so daß man nun nicht mehr befürchten muß, daß eine Rückorientierung der Ionen eintritt. Damit aber sind die Effektivität der Behandlung und die Reproduzierbarkeit des Prozesses realisiert.

Es empfiehlt sich, die Behandlung wie auch das Ruhenlassen des Saatgutes in der Nähe des für das Säen ausersehenen Kulturbodens durchzuführen, was mit der erfindungsgemäßen mobilen Einrichtung auf einfache Weise geschehen kann. Durch eine solche Lösung können namhafte Aufwandkosten für Transport und Einlagerung eingespart, sowie auch die Organisierung der Behandlungen wesentlich vereinfacht werden.

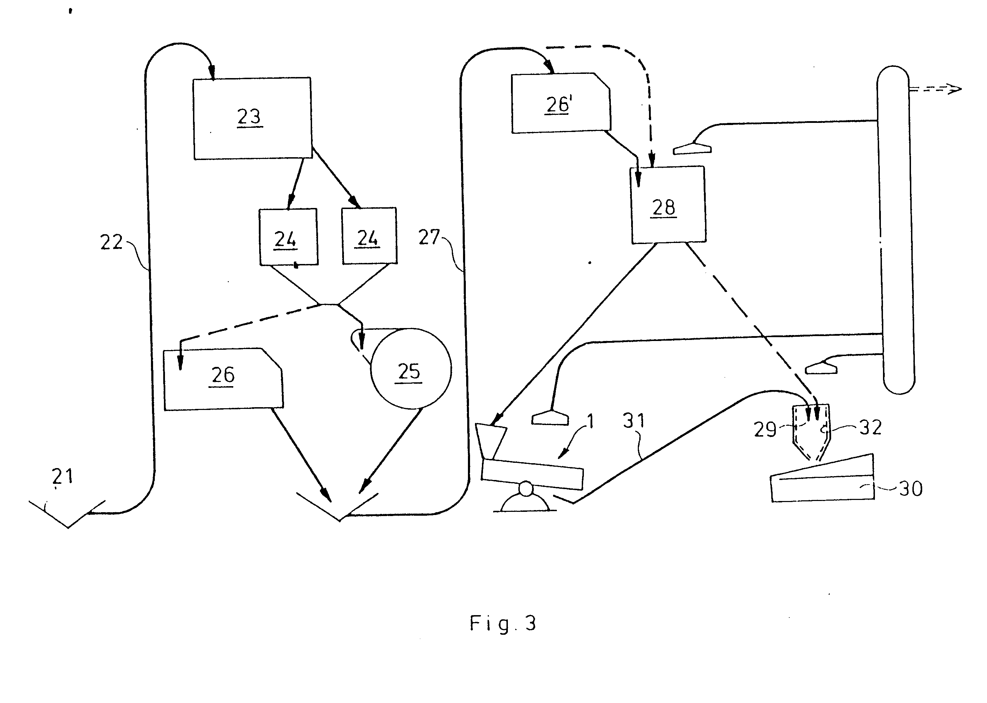

In Fig. 3 wird gezeigt, wie die erfindungsgemäße Einrichtung nach Fig. 1 und 2 in eine Maschinenstrecke für Saatgutaufbereitung eingegliedert werden kann. Die erfindungsgemäß zur "Schockung" dienende Einrichtung wurde auch hier mit Bezugsnummer 1 bezeichnet. Die an sich bekannte Saatgutaufbereitungs-Maschinenstrecke besteht aus einem zentral angeordneten Trichter 21 und einem Elevator 22, welch letzterer das Saatgut zu einem Vorreiniger 23 gelangen läßt. Das Saatgut läuft dann weiter über einen Kalibrator 24 entweder in einen Flotations-Endreiniger 25, oder in einen Separator 26 zur Endreinigung. Von hier befördert ein Förderer 27 die Samenkörner in einen Beizapparat 28 wonach das Saatgut auf eine automatische Waage 29 und in eine automatische Absack-und Sacknähvorrichtung 30 gelangt.

Wird verlangt, daß die Erhöhung des biologischen Wertes der für die Aussaat vorgesehenen Samenkörner indirekt, wie auch direkt erzielt werden soll, dann empfiehlt es sich, die Körner aus einem zweiten Separator 26' in den Beizapparat 28, danach aber in die erfindungsgemäße Einrichtung 1 gelangen zu lassen. Von da gelangen dann die Körner über einen isolierten Bandförderer 31 in den Trichter der automatischen Waage 29, der in diesem Fall mit einem Elektroisolationsfutter 32 versehen wird, um eine Berührung der Samenkörner mit leitenden Einrichtungsteilen mit Erdpotential mit Sicherheit zu verhindern. Die behandelten Samenkörner gelangen von hier in die automatische Absack-und Sacknähvorrichtung 30, wo das vorbehandelte Saatgut durch die zum Absacken verwendeten Kunststoff-oder Papiersäcke - schon an sich gegen das Erdpotential abgeschirmt sind, und deshalb auf diese Weise die Stabilisierung des Dipolmomentes in der für das Ruhenlassen vorgesehenen weiteren Lagerungszeit ungestört und sicher erfolgen kann.

## Ansprüche

1. Einrichtung zur Erhöhung des biologischen Wertes von Samenkörnern, insbesondere von landwirtschaftlichem Saatgut, mit einem in einem Behandlungsraum (9) oberhalb eines zur Horizontalen einstellbar neigbaren Fördertisches (4) eingebauten, mit einer elektrischen Speiseeinheit (13) zur Erzeugung einer variablen Hochspannung verbundenen gitterartigen oberen Kondensatorarmatur (11), deren Gitterelemente in in der Bewegungsrichtung der zu behandelnden Körner kleinen Abständen voneinander angeordnet sind und der eine auf Erdpotential liegende untere Kondensatorarmatur (12) zugeordnet ist, und einem mit dem Fördertisch (4) verbundenen regulierbaren Vibrator (10), dadurch gekennzeichnet, daß die obere Kondensatorarmatur aus Plattenbändern (11) besteht, daß die elektrische Speiseeinheit (13) zur Erzeugung eines Hochspannungsfeldes von 10 bis 40 kV/cm bei Frequenzen von 2,5 bis 3 kHz ausgebildet ist, daß der Fördertisch auf eine in Förderrichtung verlaufende Neigung ($\alpha$) bis zum Erreichen des natürlichen Böschungswinkels des Korngutes einstellbar ist und daß die Einrichtung als schleppbarer Fahrzeuganhänger mit einem Fahrwerk (2) und einem Gestell (3) ausgebildet ist.

2. Einrichtung nach Anspruch 1, dadurch gekennzeichnet, daß die Neigung (α) des Fördertisches (4) durch Kippen des Anhängers (2, 3) einstellbar ist.

3. Einrichtung nach Anspruch 1 oder 2, dadurch gekennzeichnet, daß die Kondensatorarmaturen (11, 12) mit dem Fördertisch (4) mitvibrierend angeordnet sind.

4. Einrichtung nach einem Ansprüche 1 bis 3, dadurch gekennzeichnet, daß die untere Kondensatorarmatur (12) als den Plattenbändern (11) gemeinsam zugeordnete Platte ausgebildet ist.

Fig. 1

0 220 608

Fig. 2

Fig. 3

0 220 608